# FASCICULE DE BREVET EUROPEEN

(11) **EP 3 959 897 B1**
(45) Date de publication et mention de la délivrance du brevet: **01.02.2023**
(21) Numéro de dépôt: 20719188.3
(22) Date de dépôt: 16.04.2020
(51) Int. Cl.: H04Q 9/00

(54) **PROCÉDÉ DE RELEVÉ DE COMPTEURS À FLUIDES**
VERFAHREN ZUM ABLESEN VON FLÜSSIGKEITSMESSERN
METHOD FOR READING FLUID METERS

(30) Priorité: 23.04.2019 FR 1904276
(43) Date de publication de la demande: 02.03.2022
(73) Titulaire: Sagemcom Energy & Telecom SAS, 92500 Rueil-Malmaison (FR)
(72) Inventeur: TEBOULLE, Henri, 92500 RUEIL MALMAISON (FR)
(74) Mandataire: Cabinet Le Guen Maillet
(86) Numéro de dépôt international: PCT/EP2020/060723
(87) Numéro de publication internationale: WO 2020/216671

(56) Documents cités:
- EP-A1- 1 608 200

## Description

### DOMAINE TECHNIQUE

La présente invention concerne un procédé de relevé automatisé à distance de compteurs à fluides tels que des compteurs à eau ou à gaz, ainsi qu'un système et des dispositifs mettant en oeuvre ledit procédé.

### ETAT DE LA TECHNIQUE ANTERIEURE

Par soucis d'efficacité et de rationalisation, les fournisseurs d'électricité, de gaz et d'eau, ont cherché à automatiser le relevé des consommations de leurs clients en évitant le recours à des déplacements d'opérateurs pour effectuer les relevés. Les réseaux de distribution d'électricité sont particulièrement adaptés aux relevés automatisés et à distance des compteurs électriques car ils offrent une infrastructure permettant des communications par courants porteurs en ligne. Les infrastructures de distribution d'eau et de gaz ne peuvent pas, quant à elles, servir d'infrastructure de communication. Malgré tout, la tendance à la rationalisation des relevés a aussi touché les fournisseurs de gaz et d'eau. Les compteurs à gaz et à eau, appelés *compteurs à fluides* par la suite, sont devenus *intelligents* et des solutions permettant un relevé automatique et à distance de ces compteurs ont été développées. Ces solutions s'appuient notamment sur le standard de communication WM-Bus (« Wireless Meter Bus » en terminologie anglo-saxonne). Le standard WM-Bus (NF EN 13757-4, « Communication systems for meters and remote reading of meters - Part 4: Wireless meter readout (Radio meter reading for operation in SRD bands) » en terminologie anglo-saxonne) est un standard de communication sans fils offrant un excellent compromis entre faible encombrement des antennes et portée en intérieur comme en extérieur élevée (jusqu'à « 1 » km sans répéteurs). Présentant un caractère bidirectionnel, le standard WM-Bus autorise des interventions à distance par un centre de contrôle. Le déploiement d'une infrastructure de communication WM-Bus nécessite une implantation d'un modem d'autonomie élevée (jusqu'à 12 ans pour une alimentation au lithium) sur chaque compteur à fluides et un concentrateur central (« 1 » concentrateur central par immeuble de « 6 » à « 7 » étages en moyenne) qui joue un rôle de passerelle (« Gateway » en terminologie anglo-saxonne) chargée de collecter les informations relevées et de les transmettre à une entité de gestion.

Dans les architectures actuelles de relevé de compteurs à fluides, les compteurs à fluides sont généralement unidirectionnels (ils ne peuvent qu'émettre des données mais ne peuvent pas en recevoir) et émettent une trame contenant une information représentative d'une consommation de fluides qu'ils mesurent toutes les cinquante secondes à destination de la passerelle à laquelle ils sont rattachés. Dans un souci de réduction de la consommation d'énergie des passerelles, celles-ci sont la plupart du temps dans un mode à faible consommation d'énergie, dit *mode veille.* Elle ne passe dans un mode plus consommateur en énergie, dit *mode réveil,* qu'une fois par jour pendant une période d'une durée prédéfinie P. La durée prédéfinie P est en général égale à deux minutes. Les compteurs à fluides ne sont pas informés du démarrage de la période de réveil de la passerelle, ce qui les oblige à être éveillés au moins toutes les cinquante secondes afin d'être certains d'émettre leur information représentative d'une consommation de fluides au moins deux fois pendant la période de réveil de la passerelle à laquelle ils sont rattachés. Ceci présente l'inconvénient majeur d'être très consommateur en énergie au niveau des compteurs à fluides qui doivent émettre très souvent. De plus, les compteurs à fluides n'étant pas synchronisés entre eux, il existe un fort risque de collisions entre les trames émises par les compteurs à fluides.

Il est alors souhaitable de pallier ces inconvénients de l'état de la technique. Il est notamment souhaitable de proposer un procédé permettant de collecter des informations représentatives de consommations de fluides mesurées par une pluralité de compteurs n'impliquant pas une consommation énergétique excessive au niveau des compteurs à fluides. Il est par ailleurs souhaitable que ce procédé permette de limiter, voire d'empêcher, les collisions entre les trames émises par les compteurs à fluides de la pluralité de compteurs à fluides.

### EXPOSE DE L'INVENTION

Selon un premier aspect de l'invention, l'invention concerne un procédé de relevé automatisé à distance de compteurs à fluides exécuté dans un système comprenant une pluralité de compteurs à fluides, dits compteurs, mesurant chacun une consommation de fluides et au moins une passerelle, chaque passerelle étant apte à échanger des trames conformes à un standard de communication sans fils avec une pluralité de compteurs via un premier réseau de communication, et à communiquer avec une entité de gestion en charge de traiter de manière centralisée des informations représentatives d'une consommation de fluides, dites relevés, émanant de compteurs via un deuxième réseau. Le procédé comprend pour chaque passerelle : obtenir au moins une liste ordonnée de compteurs appariés avec ladite passerelle, chaque compteur de chaque liste ayant été apparié en exécutant une procédure d'appariement durant laquelle la passerelle a envoyé à chaque compteur une trame, dite trame de synchronisation, chaque trame de synchronisation comprenant pour chaque liste une information d'horodatage permettant une mise à l'heure dudit compteur et une information représentative d'une même date de démarrage d'une prochaine période de relevé de compteurs par ladite passerelle, la passerelle étant en veille en dehors de chaque période de relevé, chaque compteur se réveillant à ladite date de démarrage indiquée dans la trame de synchronisation ; pour chaque liste et pendant chaque période de relevé correspondant à ladite liste : passer en mode actif et parcourir ladite liste dans l'ordre, et pour chaque compteur : envoyer une trame de synchronisation audit compteur, la date de démarrage, dite prochaine date de démarrage, contenue dans ladite trame de synchronisation étant identique pour chaque compteur de la liste ; suite à une réception d'un acquittement pour la trame de synchronisation, envoyer une trame demandant audit compteur de fournir un relevé; et, passer au compteur suivant de ladite liste suite à une réception d'une trame, dite trame de relevé, contenant le relevé demandé, chaque compteur passant en veille suite à l'envoi de la trame de relevé ;et, passer en veille suite au parcours de ladite liste jusqu'à la prochaine date de démarrage.

Selon un mode de réalisation, lorsqu'au moins un compteur d'une liste ne renvoie pas d'acquittement suite à un envoi d'une trame de synchronisation destinée à ce compteur et/ou ne renvoie pas de trame de relevé suite à l'envoi d'une trame demandant de fournir un relevé destiné à ce compteur, suite au parcours de la liste ordonnée, la passerelle envoie au moins une trame de synchronisation en mode multidiffusion, chaque compteur restant éveillé tant qu'une condition de mise en veille dudit compteur n'est pas respectée, la condition de mise en veille dudit compteur étant respectée lorsque ledit compteur reçoit une trame de synchronisation.

Selon un mode de réalisation, la trame de synchronisation fait office de trame demandant de fournir un relevé et la trame de relevé fait office de trame d'acquittement.

Selon un mode de réalisation, la passerelle modifie l'ordre des compteurs dans chaque liste à chaque période de relevé de compteurs de manière à équilibrer le temps de réveil desdits compteurs.

Selon un mode de réalisation, lorsqu'un compteur d'une liste ne renvoie pas d'acquittement suite à un envoi d'une trame de synchronisation destinée à ce compteur et/ou ne renvoie pas de trame de relevé suite à l'envoi d'une trame demandant de fournir un relevé destiné à ce compteur sur un nombre prédéfini de périodes de relevé de compteurs consécutives, la passerelle considère que la procédure d'appariement doit être réappliquée pour ce compteur.

Selon un deuxième aspect de l'invention, l'invention concerne un dispositif de type passerelle permettant de relever de manière automatisée à distance des compteurs à fluides dans un système comprenant une pluralité de compteurs à fluides, dits compteurs, mesurant chacun une consommation de fluides, ledit dispositif étant apte à échanger des trames conformes à un standard de communication sans fils avec une pluralité de compteurs via un premier réseau de communication, et à communiquer avec une entité de gestion en charge de traiter de manière centralisée des informations représentatives d'une consommation de fluides, dites relevés, émanant de compteurs via un deuxième réseau. Le dispositif comprend : des moyens d'obtention pour obtenir au moins une liste ordonnée de compteurs appariés avec ladite passerelle, chaque compteur de chaque liste ayant été apparié en exécutant une procédure d'appariement durant laquelle ledit dispositif a envoyé à chaque compteur une trame, dite trame de synchronisation, chaque trame de synchronisation comprenant pour chaque liste une information d'horodatage permettant une mise à l'heure dudit compteur et une information représentative d'une même date de démarrage d'une prochaine période de relevé de compteurs par ledit dispositif, le dispositif étant en veille en dehors de chaque période de relevé, chaque compteur se réveillant à ladite date de démarrage indiquée dans la trame de synchronisation ; des moyens exécutés pour chaque liste et pendant chaque période de relevé correspondant à ladite liste comprenant : des moyens de contrôle pour passer en mode actif et des moyens de parcours pour parcourir ladite liste dans l'ordre, et pour chaque compteur : des moyens de communication pour envoyer une trame de synchronisation audit compteur, la date de démarrage, dite prochaine date de démarrage, contenue dans ladite trame de synchronisation étant identique pour chaque compteur de la liste ; des moyens de communication pour recevoir un acquittement pour la trame de synchronisation, et des moyens de communication pour envoyer une trame demandant audit compteur de fournir un relevé, suite à une réception d'un acquittement; des moyens de communication pour recevoir une trame, dite trame de relevé, contenant un relevé demandé ; et, des moyens de contrôle pour passer au compteur suivant de ladite liste suite à une réception d'une trame de relevé, chaque compteur passant en veille suite à l'envoi de la trame de relevé ; et, des moyens de contrôle pour passer en veille suite au parcours de ladite liste jusqu'à la prochaine date de démarrage.

Selon un troisième aspect de l'invention, l'invention concerne un procédé de relevé automatisé à distance de compteurs à fluides exécuté dans un système comprenant une pluralité de compteurs à fluides, dits compteurs mesurant chacun une consommation de fluides, et une passerelle, la passerelle étant apte à échanger des trames conformes à un standard de communication sans fils avec la pluralité de compteurs via un premier réseau de communication, et à communiquer avec une entité de gestion en charge de traiter de manière centralisée des informations représentatives d'une consommation de fluides, dites relevés, émanant de compteurs via un deuxième réseau, la passerelle définissant des périodes de relevé de compteurs durant lesquelles elle effectue des relevés de compteurs, caractérisé en ce que le procédé comprend pour chaque compteur et chaque période de relevé de compteurs : obtenir une première date de démarrage d'une période de relevé de compteurs, la première date ayant été obtenue lors d'une réception d'une trame de synchronisation, chaque trame de synchronisation comprenant une information d'horodatage permettant une mise à l'heure dudit compteur et une information représentative d'une date de démarrage d'une prochaine période de relevé de compteurs par la passerelle, ladite date étant identique pour un ensemble de compteurs d'une liste ordonnée de compteurs appariés avec ladite passerelle, chaque trame de synchronisation ayant été transmise soit au cours de l'exécution d'une procédure d'appariement entre le compteur et ladite passerelle, soit pendant une période de relevé de compteurs précédente ; se réveiller à la première date de démarrage ; en cas de réception d'une trame de synchronisation, conserver la date de démarrage, dite deuxième date de démarrage, indiquée dans la trame de synchronisation et transmettre un acquittement à la passerelle pour ladite trame de synchronisation ; en cas de réception d'une trame demandant audit compteur de fournir un relevé, envoyer à la passerelle une trame, dite trame de relevé, contenant le relevé demandé, la date d'envoi de la trame de synchronisation et de la trame demandant de fournir un relevé dans la période de relevé de compteurs dépendant d'une position dudit compteur dans la liste ordonnée ; et, se mettre en veille suite à l'envoi de la trame de relevé jusqu'à la deuxième date de démarrage.

Selon un mode de réalisation, si le compteur à fluides reçoit une trame demandant audit compteur de fournir un relevé sans avoir reçu au préalable une trame de synchronisation, le compteur reste éveillé tant qu'une condition de mise en veille n'est pas respectée, la condition de mise en veille étant respectée lorsque ledit compteur reçoit une trame de synchronisation émise en mode multidiffusion par la passerelle.

Selon un quatrième aspect de l'invention, l'invention concerne un dispositif de type compteur à fluides, dit compteur, compris dans un système comprenant une pluralité de compteurs mesurant chacun une consommation de fluides, et une passerelle, la passerelle étant apte à échanger des trames conformes à un standard de communication sans fils avec la pluralité de compteurs via un premier réseau de communication, et à communiquer avec une entité de gestion en charge de traiter de manière centralisée des informations représentatives d'une consommation de fluides, dites relevés, émanant de compteurs via un deuxième réseau, la passerelle définissant des périodes de relevé de compteurs durant lesquelles elle effectue des relevés de compteurs. Le dispositif comprend : des moyens d'obtention pour obtenir une première date de démarrage d'une période de relevé de compteurs, la première date ayant été obtenue lors d'une réception d'une trame de synchronisation, chaque trame de synchronisation comprenant une information d'horodatage permettant une mise à l'heure dudit dispositif et une information représentative d'une date de démarrage d'une prochaine période de relevé de compteurs par la passerelle, ladite date étant identique pour un ensemble de compteurs d'une liste ordonnée de compteurs appariés avec ladite passerelle, chaque trame de synchronisation ayant été transmise soit au cours de l'exécution d'une procédure d'appariement entre le dispositif et ladite passerelle, soit pendant une période de relevé de compteurs précédente ; des moyens de contrôle pour réveiller le dispositif à la première date de démarrage ; des moyens de communication pour recevoir une trame de synchronisation ; des moyens de stockage pour conserver une date de démarrage, dite deuxième date de démarrage, indiquée dans une trame de synchronisation et des moyens de communication pour transmettre un acquittement à la passerelle en cas de réception d'une trame de synchronisation; des moyens de communication pour recevoir une trame demandant audit dispositif de fournir un relevé ; des moyens de communication pour envoyer à la passerelle une trame, dite trame de relevé, contenant un relevé en cas de réception d'une trame demandant audit dispositif de fournir un relevé, la date d'envoi de la trame de synchronisation et de la trame demandant de fournir un relevé dans la période de relevé de compteurs dépendant d'une position dudit dispositif dans la liste ordonnée ; et, des moyens de contrôle pour mettre en veille le dispositif suite à l'envoi de la trame de relevé.

Selon un cinquième aspect de l'invention, l'invention concerne un programme d'ordinateur, comprenant des instructions pour mettre en oeuvre, par un dispositif, le procédé selon le premier aspect ou le procédé selon le troisième aspect, lorsque ledit programme est exécuté par une unité de calcul dudit dispositif.

Selon un sixième aspect de l'invention, l'invention concerne des moyens de stockage, stockant un programme d'ordinateur comprenant des instructions pour mettre en oeuvre, par un dispositif, le procédé selon le premier aspect ou le procédé selon le troisième aspect, lorsque ledit programme est exécuté par une unité de calcul dudit dispositif.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement un système de communication, supportant un relevé automatisé et à distance d'informations représentatives de consommation de fluides mesurées par des compteurs à fluides, dans lequel la présente invention est implémentée ;
[Fig. 2] illustre schématiquement un exemple d'agencement matériel d'un module de contrôle utilisé dans le système de communication ;
[Fig. 3A] illustre schématiquement un agencement d'une passerelle du système de communication ;
[Fig. 3B] illustre schématiquement un agencement d'un compteur à fluides du système de communication ;
[Fig. 4] illustre schématiquement une procédure d'appariement entre un compteur à fluides et une passerelle ;
[Fig. 5] illustre schématiquement une première partie d'un procédé de relevé de compteurs à fluides exécuté par une passerelle ; et,
[Fig. 6] illustre schématiquement une deuxième partie d'un procédé de relevé de compteurs à fluides exécuté par un compteur à fluides.

### EXPOSE DETAILLE DE MODES DE REALISATION

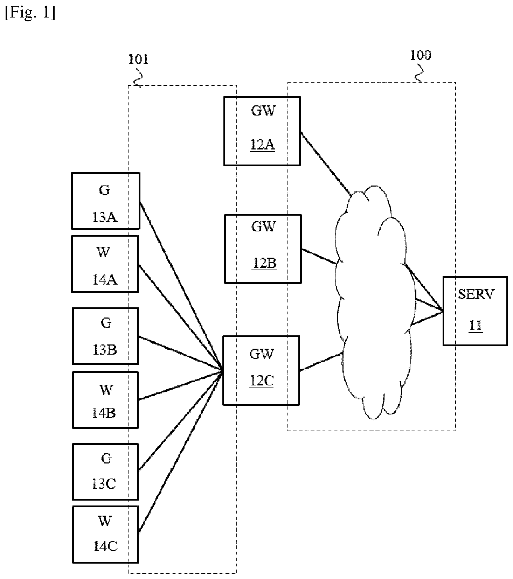

La **Fig. 1** illustre schématiquement un système de communication, supportant un relevé automatisé et à distance d'informations représentatives de consommation de fluides mesurées par des compteurs à fluides, dans lequel la présente invention est implémentée. Le système de communication comporte en outre une entité de gestion qui est notamment en charge de traiter de manière centralisée des informations représentatives d'une consommation de fluides émanant de compteurs à fluides dudit système.

L'entité de gestion prend la forme d'un serveur 11, ou d'un ensemble de serveurs, auquel des passerelles 12A, 12B et 12C sont connectées par l'intermédiaire d'un réseau de communication 100. Le réseau de communication 100 est par exemple un réseau de communication sans-fil, par exemple de type GPRS (« Général Packet Radio Service » en anglais), UMTS (« Universal Mobile Télécommunication System » en anglais) ou LTE (« Long-Term Evolution » en anglais). Le réseau de communication 100 peut en variante être un lien de communication filaire.

Chaque passerelle est reliée à un ensemble de compteurs à fluides. Dans la Fig. 1, nous n'avons représenté que des compteurs à fluides de type compteurs à gaz 13A, 13B et 13C et des compteurs à fluides de type compteurs à eau 14A, 14B et 14C rattachés à la passerelle 12C.

Un réseau de communication 101 permet aux compteurs à fluides de communiquer avec la passerelle à laquelle ils sont rattachés. Dans un mode de réalisation, le réseau de communication 101 est basé sur le standard de communication WM-Bus.

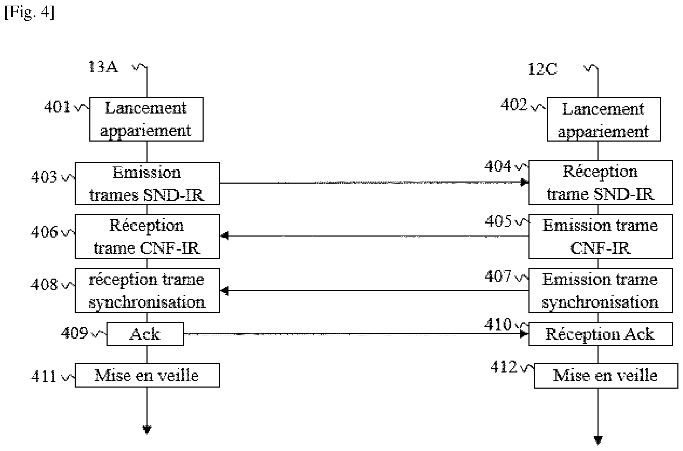

Chaque passerelle collecte des informations représentatives de consommation de fluides émanant des compteurs à fluides qui lui sont rattachés selon un procédé décrit en relation avec les Figs. 4, 5 et 6. Chaque passerelle se charge ensuite de faire remonter les informations collectées vers l'entité de gestion 11 en utilisant le réseau de communication 100.

Dans un mode de réalisation, le réseau de communication 101 est basé sur la technologie LoRa (marque déposée) (« Long Range » en terminologie anglo-saxonne).

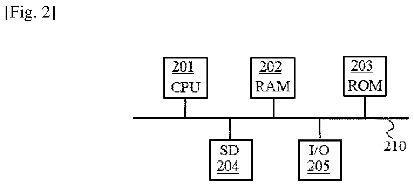

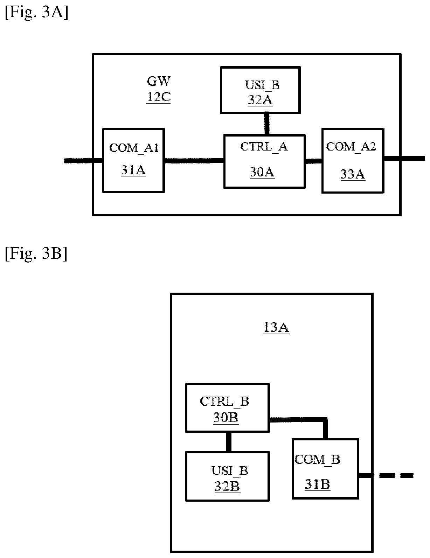

La Fig. 2 illustre schématiquement un exemple d'agencement matériel d'un module de contrôle utilisé dans le système de communication de la Fig. 1. Un tel module de contrôle se retrouve dans chaque passerelle 12A, 12B et 12C et dans chaque compteur à fluides 13A, 13B et 13C et 14A, 14B et 14C tel que détaillé ci-après en relation avec les Figs. 3A et 3B.

L'exemple d'architecture matérielle présenté comporte, reliés par un bus de communication 210 : un processeur CPU 201 ; une mémoire vive RAM (« Random Access Memory » en terminologie anglo-saxonne) 202 ; une mémoire morte ROM (« Read Only Memory » en terminologie anglo-saxonne) 203 ou une mémoire Flash ; une unité de stockage ou un lecteur de support de stockage, tel qu'un lecteur de cartes SD (« Secure Digital » en terminologie anglo-saxonne) 204 ; et un ensemble d'interfaces d'entrée/sortie I/O 205. L'ensemble d'interfaces d'entrée/sortie I/O 205 permet au module de contrôle de communiquer avec d'autres composantes au sein d'un même dispositif, tel que détaillé ci-après en relation avec les Figs. 3A et 3B.

Le processeur CPU 201 est capable d'exécuter des instructions chargées dans la mémoire RAM 202 à partir de la mémoire ROM 203, d'une mémoire externe (telle qu'une carte SD), d'un support de stockage ou d'un réseau de communication. Lors de la mise sous tension, le processeur CPU 201 est capable de lire de la mémoire RAM 202 des instructions et de les exécuter. Ces instructions forment un programme d'ordinateur causant la mise en oeuvre, par le processeur CPU 201, de tout ou partie des procédés et étapes décrits par la suite en relation avec les Figs. 4, 5 et 6.

Ainsi, tout ou partie des procédés et étapes décrits en relation avec les Figs. 4, 5 et 6 peut être implémenté sous forme logicielle par exécution d'un ensemble d'instructions par une machine programmable, telle qu'un DSP (« Digital Signal Processor » en anglais) ou un microcontrôleur ou un processeur. Tout ou partie des procédés et étapes décrits en relation avec les Figs. 4, 5 et 6 peut aussi être implémenté sous forme matérielle par une machine ou un composant dédié, tel qu'un FPGA (« Field-Programmable Gate Array » en anglais) ou un ASIC (« Application-Specific Integrated Circuit » en anglais). Ainsi, le module de contrôle comporte de la circuiterie électronique adaptée et configurée pour implémenter les procédés et étapes décrits en relation avec les Figs. 4, 5 et 6.

La **Fig. 3A** illustre schématiquement un agencement d'une passerelle du système de communication.

Nous prenons ici l'exemple de la passerelle 12C, mais les passerelles 12A et 12B sont identiques. La passerelle 12C comprend un module de contrôle 30A tel que décrit en relation avec la Fig. 2. Le module de contrôle 30A est en charge de superviser le fonctionnement de la passerelle 12C.

La passerelle 12C comprend en outre un premier module de communication 31A destiné à permettre de communiquer avec les compteurs à fluides rattachés à la passerelle 12C via le réseau de communication 101.

La passerelle 12C comprend en outre un second module de communication 33A destiné à permettre de communiquer avec l'entité de gestion via le réseau de communication 100.

La passerelle 12C peut comporter en outre un module d'interface utilisateur 32A adapté pour interagir avec des utilisateurs. Le module d'interface utilisateur 32A comprend par exemple un bouton permettant d'activer une procédure d'appariement entre la passerelle 12C et un compteur à fluides.

La **Fig. 3B** illustre schématiquement un agencement d'un compteur à fluides du système de communication. Dans la Fig. 3B, nous prenons l'exemple du compteur à fluides 13A, mais on retrouve un tel agencement dans les compteurs à fluides 13B, 13C, 14A, 14B et 14C. Le compteur à fluides 13A comprend un module de contrôle 30B identique au module de contrôle décrit en relation avec la Fig. 2. Le module de contrôle 30B est en charge de superviser le fonctionnement du compteur à fluides 13A.

Le compteur à fluides 13A peut comprendre en outre un module d'interface utilisateur 32B adapté pour interagir avec des utilisateurs. Le module d'interface utilisateur 32B est par exemple un bouton permettant d'activer une procédure d'appariement du compteur à fluides 13A avec la passerelle 12C à laquelle le compteur à fluides 13A est rattaché.

Le compteur à fluides 13A comprend en outre un module de communication 31B destiné à permettre de communiquer avec la passerelle 12C via le réseau de communication 101.

La **Fig. 4** illustre schématiquement une procédure d'appariement entre un compteur à fluides et une passerelle.

Dans la Fig. 4, nous prenons l'exemple des échanges entre la passerelle 12C et le compteur à fluides 13A. La même procédure d'appariement est exécutée pour apparier le compteur 13B (respectivement 13B, 13C, 14A, 14B, 14C) avec la passerelle 12C.

Tous les échanges entre la passerelle 12C et le compteur à fluides 13A utilisent des trames conformes au standard WM-Bus. Les trames échangées entre la passerelle 12C et le compteur à fluides 13A sont appelées par la suite *trames WM-Bus.* Nous appelons par la suite les trames WM-Bus allant dans le sens compteur à fluides 13A vers la passerelle 12C, *trames WM-Bus montantes* et les trames WM-Bus allant dans le sens passerelle 12C vers le compteur à fluides 13A, *trames WM-Bus descendantes.*

Dans une étape 401, un utilisateur presse le bouton de l'interface utilisateur 32B du compteur à fluides 13A. Le module de contrôle 30B du compteur à fluides 13A capte cette action sur le bouton.

Dans une étape 403, le module de contrôle 30B provoque l'envoi par le module de communication 31B de messages de signalisation pendant une période prédéfinie, chaque message de signalisation prenant la forme d'une trame WM-Bus montante de signalisation, c'est-à-dire une trame conforme au standard WM-Bus comprenant un symbole SND-IR tel que défini dans la table 24 du standard. Par exemple, la période prédéfinie dure quinze minutes. Chaque trame WM-Bus montante de signalisation comprend un identifiant du compteur à fluides sous la forme d'un champ *A_field* sur six octets défini par le standard WM-Bus. Cet identifiant est unique pour chaque compteur. On note que cet identifiant est aussi utilisé dans les trames WM-Bus descendantes destinées aux compteurs.

Dans une étape 402, l'utilisateur presse le bouton de l'interface utilisateur 32A de la passerelle 12C. Le module de contrôle 30A de la passerelle 12C capte cette action sur le bouton. A ce stade le module de contrôle 30A sait qu'il rentre dans une phase d'appariement et qu'il va recevoir au moins une trame WM-Bus montante de signalisation. Dans une étape 404, la passerelle 12C reçoit au moins une trame WM-Bus montante de signalisation par l'intermédiaire de son module de communication 31A.

Dans une étape 405, suite à la réception de la trame WM-Bus montante de signalisation, le module de contrôle 30A de la passerelle 12C provoque un envoi d'une trame WM-Bus descendante, dite d*'appariement réussi,* c'est-à-dire une trame conforme au standard WM-Bus comprenant un symbole CNF-IR tel que défini dans la table 25 du standard WM-Bus, au compteur à fluides 13A. Chaque trame WM-Bus descendante d'appariement réussi comprend un identifiant du compteur à fluides à qui cette trame est destinée sous forme d'un champ *A_field.*

Dans une étape 406, le compteur à fluides 13A reçoit la trame WM-Bus descendante d'appariement réussi par l'intermédiaire de son module de communication 31B. Le module de contrôle 30B en déduit que la passerelle 12C et le compteur à fluides 13A sont maintenant appariés.

Dans une étape 407, le module de contrôle 30A provoque un envoi par la passerelle 12C par l'intermédiaire du module de communication 31A, d'une trame WM-Bus descendante dite *de synchronisation.* Chaque trame WM-Bus descendante de synchronisation comprend un identifiant du compteur à fluides à qui cette trame est destinée sous forme d'un champ *A_field.* Une trame WM-Bus descendante de synchronisation comprend dans sa partie correspondant à la couche applicative selon le modèle OSI (« Open Systems Interconnection » en terminologie anglo-saxonne), un octet de commande égale à la valeur hexadécimale 0x01 et une charge utile (« payload en terminologie anglo-saxonne) de six octets comprenant une information d'horodatage permettant une mise à l'heure d'une horloge interne du compteur à fluides 13A et une information représentative de la prochaine date de réveil de la passerelle 12C. L'information d'horodatage comprend :
- un octet représentatif d'une valeur d'heure ;
- un octet représentatif d'une valeur de minutes ;
- un octet représentatif d'une valeur de secondes ;
- un octet représentatif d'une valeur de jour ;
- un octet représentatif d'une valeur de mois ;
- un octet représentatif d'une valeur d'année.

L'information représentative de la prochaine date de réveil de la passerelle 12C comprend :
- un octet représentatif d'une valeur d'heure ;
- un octet représentatif d'une valeur de minutes ;
- un octet représentatif d'une valeur de secondes ;
- un octet représentatif d'une valeur de jour ;
- un octet représentatif d'une valeur de mois ;
- un octet représentatif d'une valeur d'année.

La prochaine date de réveil de la passerelle 12C correspond à une date de démarrage d'une période, dite période de relevé de compteurs, durant laquelle la passerelle 12C va relever l'information représentative d'une consommation de fluides de chaque compteur qui lui sont rattachés. Dans un mode de réalisation, le démarrage de chaque période de relevé de compteurs se fait à un horaire (heure, minute, seconde) prédéfini chaque jour, par exemple à 04H00min00s. Dans un autre mode de réalisation, cet horaire est déterminé aléatoirement.

Dans une étape 408, le compteur à fluides 13A reçoit la trame WM-Bus descendante de synchronisation par l'intermédiaire de son module de communication 31B. Le module de contrôle 30B met alors une horloge interne comprise dans le compteur à fluides 13A à l'heure en utilisant l'information d'horodatage et conserve l'information représentative de la prochaine date de réveil de la passerelle 12C.

Dans une étape 409, le compteur à fluides 13A transmet une trame WM-Bus montante dite d*'accusé de réception,* c'est-à-dire comprenant un symbole ACC-DMD tel que décrit dans la table 24 du standard WM-Bus.

Dans une étape 410, la passerelle 12C reçoit la trame WM-Bus montante d'accusé de réception et le module de contrôle 30A met la passerelle 12C en veille lors d'une étape 412 jusqu'à la prochaine période de relevé de compteurs fixée dans la trame WM-Bus descendante de synchronisation.

Dans une étape 411, le module de contrôle 30B met le compteur à fluides 13A en veille jusqu'à la date de démarrage de la prochaine période de relevé de compteurs indiquée dans la trame WM-Bus descendante de synchronisation.

Le procédé de la Fig. 4 permet donc d'obtenir un ensemble de compteurs à fluides appariés avec la passerelle 12C.

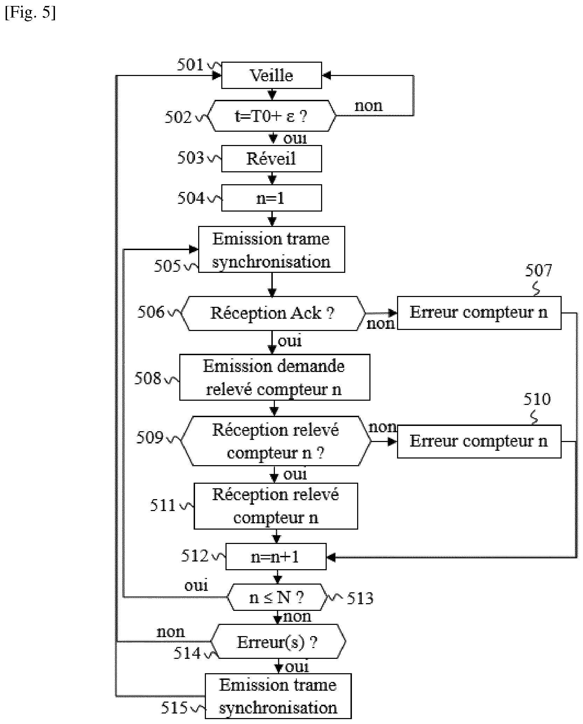

La **Fig. 5** illustre schématiquement une première partie d'un procédé de relevé de compteurs à fluides exécuté par une passerelle.

Grâce au procédé de la Fig. 5, la passerelle 12C va relever chaque compteur qui lui est rattaché sans risque de collision entre trames.

On suppose ici qu'un nombre N de compteurs à fluides sont appariés avec la passerelle 12C. Dans un mode de réalisation, ces compteurs à fluides sont bidirectionnels, c'est-à-dire qu'ils peuvent émettre et recevoir des trames.

Dans une étape 501, la passerelle 12C est en veille. Par ailleurs, au sein de la passerelle 12C, chaque compteur à fluides est associé à un numéro d'ordre compris entre « 1 » et *N.* Un numéro d'ordre a par exemple été attribué à chaque compteur à fluides par la passerelle 12C lors de la phase d'appariement. On considère alors que les compteurs à fluides ainsi associés à un numéro d'ordre forment une liste ordonnée de compteurs appariés avec la passerelle 12C. Pendant la phase d'appariement, la passerelle 12C connaît le nombre de compteurs à fluides déjà appariés et incrémente ce nombre d'une unité à chaque nouvel appariement. Le nombre ainsi incrémenté correspond au numéro d'ordre du dernier compteur à fluide apparié. Chaque numéro d'ordre est ainsi associé à une adresse d'un compteur à fluides correspondant.

Dans une étape 502, le module de contrôle 30A de la passerelle 12C compare une date courante *t* à la date de démarrage de la prochaine période de relevé de compteurs *T0.* Dans un mode de réalisation, pour prendre en compte les éventuels décalages d'horloge entre la passerelle 12C et les compteurs à fluides qui lui sont rattachés, le module de contrôle 30A ajoute une valeur de correction ε à la date T0. Dans un mode de réalisation, ε=3s.

Si la date courante t correspond à la date de démarrage de la prochaine période de relevé de compteurs *TO* (ou *T0*+ ε), le module de contrôle 30A réveille la passerelle 12C lors d'une étape 503. Sinon, la passerelle 12C reste en veille.

Dans une étape 504, le module de contrôle 30A initialise une variable *n* à « 1 ». La variable *n* sert à parcourir la liste ordonnée des *N* compteurs à fluides rattachés à la passerelle 12C. Les compteurs à fluides sont donc parcourus dans l'ordre de leur numéro d'ordre.

Dans une étape 505, le module de contrôle 30A provoque un envoi d'une trame WM-Bus descendante de synchronisation comprenant une information d'horodatage correspondant à l'instant d'envoi de la trame et une information représentative de la date de démarrage de la prochaine période de relevé de compteurs *TO* à destination du compteur à fluides correspondant à un numéro d'ordre de valeur *n*. On note que, pendant une période de relevé de compteurs, la passerelle 12C transmet une date de démarrage de la prochaine période de relevé de compteurs *TO* identique à chaque compteur à fluides de la liste ordonnée.

Dans une étape 506, le module de contrôle 30A vérifie si la passerelle 12C a reçu une trame WM-Bus montante d'accusé de réception. Si au bout d'une durée prédéterminée Δ suivant l'envoi de la trame WM-Bus descendante de synchronisation la passerelle 12C n'a pas reçu une trame WM-Bus montante d'accusé de réception de la part du compteur à fluides de numéro d'ordre *n,* le module de contrôle 30A considère que le compteur à fluides de numéro d'ordre *n* est en erreur lors d'une étape 507. Dans un mode de réalisation, la durée prédéterminée Δ est égale à « 3 » secondes. L'étape 507 est alors suivie d'une étape 512.

Si la passerelle 12C reçoit une trame WM-Bus montante d'accusé de réception émanant du compteur à fluides de numéro d'ordre *n* pendant la durée prédéterminée Δ, le module de contrôle 30A provoque l'envoi, lors d'une étape 508, d'une trame WM-Bus descendante dite de *demande de relevé,* à destination du compteur à fluides de numéro d'ordre *n.* La trame WM-Bus descendante de demande de relevé comprend dans une partie correspondant à la couche applicative selon le modèle OSI, un octet de commande de valeur 0x02 et une charge utile vide. La trame WM-Bus descendante de demande de relevé demande au compteur à fluides auquel cette demande est adressée de lui fournir une information représentative d'une consommation de fluides mesurée par ledit compteur à fluides.

Dans une étape 509, le module de contrôle 30A vérifie si la passerelle 12C a reçu une trame WM-Bus montante dite *de relevé* contenant l'information représentative d'une consommation de fluides demandée. La trame WM-Bus montante de relevé comprend dans une partie correspondant à la couche applicative selon le modèle OSI, un octet de commande de valeur 0x02 et une charge utile de dix octets représentant l'information représentative d'une consommation de fluides. L'information représentative d'une consommation de fluides est composée d'un index (appelé aussi valeur de comptage) représentant une consommation de fluides codée sur quatre octets et six octets d'horodatage comprenant :
- un octet représentatif d'une valeur d'heure ;
- un octet représentatif d'une valeur de minutes ;
- un octet représentatif d'une valeur de secondes ;
- un octet représentatif d'une valeur de jour ;
- un octet représentatif d'une valeur de mois ; et,
- un octet représentatif d'une valeur d'année.

Si au bout de la durée prédéterminée Δ suivant l'envoi de la trame WM-Bus descendante de demande d'index la passerelle 12C ne reçoit pas de trame WM-Bus montante de relevé en provenance du compteur à fluides de numéro d'ordre *n,* le module de contrôle 30A considère que le compteur à fluides de numéro d'ordre *n* est en erreur lors d'une étape 510. L'étape 510 est suivie de l'étape 512.

Si la passerelle 12C reçoit une trame WM montante de relevé en provenance du compteur à fluides de numéro d'ordre *n,* la passerelle 12C retransmet l'information représentative d'une consommation de fluides contenue dans cette trame à l'entité de gestion 11 avec un identifiant du compteur à fluides concerné lors d'une étape 511.

Au cours de l'étape 512, le module de contrôle 30A incrémente la variable *n* d'une unité pour passer au compteur à fluides suivant de la liste ordonnée.

Dans une étape 513, le module de contrôle 30A compare la valeur de la variable *n* au nombre de compteurs à fluides *N* rattachés à la passerelle 12C. Si *n*≤*N*, le module de contrôle 30A retourne à l'étape 505 pour relever un nouveau compteur à fluides.

Sinon, le module de contrôle 30A vérifie si des compteurs à fluides parmi les N compteurs à fluides qui lui sont rattachés sont en erreur. Si aucun compteur à fluides n'est en erreur, le module de contrôle 30A retourne à l'étape 501 et fait passer la passerelle 12C en veille jusqu'à la prochaine période de relevé de compteurs dont la date de démarrage *TO* a été fixée lors de l'étape 505. On note que la date de démarrage *TO* est la même pour tous les compteurs à fluides d'une même liste ordonnée.

Si au moins un compteur à fluides parmi les N compteurs à fluides rattachés à la passerelle 12C est en erreur, certains compteurs à fluides rattachés à la passerelle 12C risquent de ne pas avoir reçu la trame WM-Bus descendante de synchronisation envoyée lors de l'étape 505. Ces compteurs à fluides risquent d'une part de ne plus être synchronisés avec la passerelle 12C et d'autre part, de ne pas connaître la date de démarrage de la prochaine période de relevé de compteurs *T0.* Pour éviter cette situation, dans une étape 515, le module de contrôle 30A provoque un envoi d'une trame WM-Bus descendante de synchronisation en mode multidiffusion (« broadcast » en terminologie anglo-saxonne) afin de permettre aux compteurs à fluides qui sont en situation de recevoir cette trame de la recevoir. Le standard WM-Bus ne précise pas comment transmettre une trame en mode multidiffusion. Dans un mode de réalisation, on considère que le champ *A-field* comprend un champs *identification number* codé sur quatre octets parmi les six du champ *A-field.* Pour transmettre une trame en mode multidiffusion, tous les bits du champ *identification number* sont mis à « 1 ».

Dans un mode de réalisation, les étapes 506, 507 et 508 ne sont pas exécutées. Dans ce mode de réalisation, la trame WM-Bus descendante de synchronisation fait office de trame WM-Bus descendante de demande de relevé et la trame WM-Bus montante de relevé fait office de trame WM-Bus montante d'accusé de réception pour accuser réception de la trame WM-Bus descendante de synchronisation.

Dans un mode de réalisation, la passerelle 12C, en plus de relever les informations représentatives de consommation de fluides des compteurs bidirectionnels qui lui sont rattachés selon le procédé décrit en Fig. 5, elle reçoit des trames WM-Bus montantes de relevé de compteurs à fluides unidirectionnels. Ces compteurs à fluides sont alors désynchronisés de la passerelle 12C (ils ne connaissent pas la date de démarrage de la prochaine période de relevé de compteurs *T0*) et des compteurs à fluides bidirectionnels concernés par le procédé de la Fig. 5. Le risque qu'une trame WM-Bus émanant d'un compteur à fluides unidirectionnel rentre en collision avec une trame WM-Bus échangée entre un compteur à fluides bidirectionnel et la passerelle 11 est alors important. Pour limiter le risque qu'un compteur à fluides bidirectionnel concerné par le procédé de la Fig. 5 ne soit plus synchronisé avec la passerelle 12C ou ne reçoive pas la date de démarrage de la prochaine période de relevé de compteurs *T0,* lors de l'étape 515, le module de contrôle 30A provoque un envoi d'une pluralité de trames WM-Bus descendantes de synchronisation en mode multidiffusion. Par exemple, le module de contrôle 30A provoque l'envoi de trois trames WM-Bus descendantes de synchronisation à une seconde d'intervalle.

Comme nous le verrons par la suite, chaque compteur passe en mode actif à la date de démarrage de la période de relevé de compteurs *TO* et repasse en veille dès que son information représentative d'une consommation de fluides a été relevée. Les compteurs à fluides dont les numéros d'ordre sont les plus faibles sont relevés les premiers, ce qui leur permet de passer rapidement en veille et ainsi d'économiser plus d'énergie que les compteurs à fluides ayant les numéros d'ordre les plus élevés. Dans un mode de réalisation, pour mieux répartir la consommation d'énergie dans les compteurs à fluides, le module de contrôle 30A modifie les numéros d'ordre à chaque période de relevé de compteurs, *i.e.* modifie l'ordre des compteurs dans la liste ordonnée, de manière à égaliser le temps de réveil desdits compteurs. Par exemple, chaque compteur ayant un numéro d'ordre égal à *i* (*i*∈[2, N]) prend un numéro d'ordre égal à i-1, le compteur à fluides ayant le numéro d'ordre « 1 » prenant la valeur de numéro d'ordre *N*, vu de la passerelle 12C. Dans un autre mode de réalisation, le module de contrôle 30A divise les compteurs rattachés à la passerelle 12C en une pluralité de listes ordonnées. Par exemple, le module de contrôle 30A divise les compteurs rattachés à la passerelle 12C en deux listes ordonnées. Le module de contrôle définit alors une période de relevé de compteurs pour chaque liste ordonnée, les périodes ainsi définies étant disjointes et moins longues que dans le cas d'une unique période de relevé de compteurs. Un avantage de ce mode de réalisation, est que, chaque période de relevé de compteur étant moins longue, cela implique que chaque compteur reste en éveil moins longtemps (deux fois moins longtemps dans le cas de deux listes ordonnées).

Dans un mode de réalisation, le module de contrôle 30A ne met pas la passerelle 12C en veille lorsque tous les compteurs à fluides rattachés à cette passerelle ont été relevés, ou lorsque l'étape 515 a été exécutée. Dans ce mode de réalisation, la période de relevé de compteurs est d'une durée *D*, par exemple égale à « 120 » secondes, le module de contrôle 30A met la passerelle en veille à la fin de la période de durée *D*. Le nombre de compteurs à fluides *N* est alors défini pour que la passerelle puisse relever chaque compteur à fluides qui lui est rattaché pendant la période de durée *D*.

Dans un mode de réalisation, lorsqu'un compteur à fluides est en erreur sur un nombre prédéfini de périodes de relevé de compteurs consécutives, par exemple égal à trois, le module de contrôle 30A considère qu'il faut procéder à un nouvel appariement de ce compteur à fluides et en informe l'entité de gestion 11.

Dans un mode de réalisation, lors de l'exécution du procédé d'appariement de la Fig. 4, la passerelle 12C demande une clé de cryptage correspondant au compteur à fluides en cours d'appariement à l'entité de gestion 11. Dès que cette clé est obtenue, elle sert à chiffrer tous les échanges entre la passerelle 12C et ledit compteur à fluides.

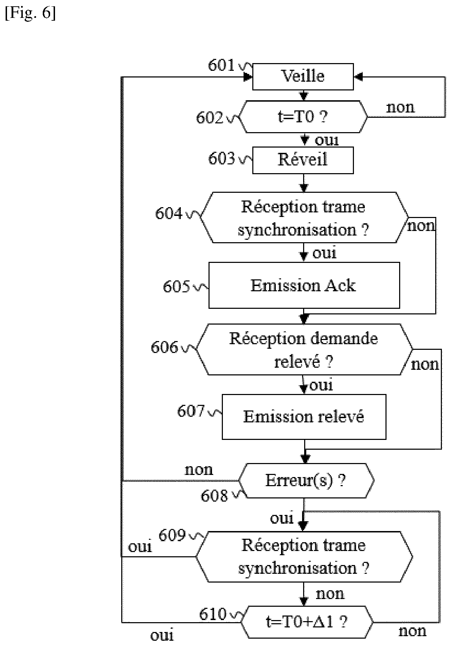

La **Fig. 6** illustre schématiquement une deuxième partie du procédé de relevé de compteurs à fluides exécuté par un compteur à fluides.

Dans la Fig. 6, nous prenons l'exemple du compteur à fluides 13A, les autres compteurs à fluides rattachés à la passerelle 12C fonctionnant de manière identique.

Dans une étape 601, le compteur à fluides 13A est en veille.

Dans une étape 602, le module de contrôle 30B du compteur à fluides 13A compare une date courante *t* à la date de démarrage de la prochaine période de relevé de compteurs *T0.* Cette date de démarrage a été obtenue lors d'une réception d'une trame de synchronisation soit au cours de l'exécution du procédé de la Fig. 4, soit pendant une période de relevé de compteurs précédente.

Si la date courante *t* correspond à la date de démarrage de la prochaine période de relevé de compteurs *T0*, le module de contrôle 30B réveille le compteur à fluides 13A lors d'une étape 603. Sinon, le compteur à fluides 13A reste en veille.

Dans une étape 604, le module de contrôle 30B du compteur à fluides 13A vérifie s'il a reçu une trame WM-Bus descendante de synchronisation par l'intermédiaire de son module de communication 31B. La réception d'une trame WM-Bus descendante de synchronisation par le compteur à fluides 13A provoque un envoi d'une trame WM-Bus d'accusé de réception à destination de la passerelle 12C lors d'une étape 605. Par ailleurs, lors de l'étape 605, le module de contrôle 30B conserve la date de démarrage de la prochaine période de relevé de compteurs contenue dans la trame WM-Bus descendante de synchronisation et resynchronise une horloge interne sur l'information d'horodatage contenue dans ladite trame WM-Bus descendante de synchronisation.

Dans une étape 606 qui peut suivre l'étape 604 ou l'étape 605 ou être conjointe à l'étape 604, le module de contrôle 30B vérifie si le compteur à fluides 13A a reçu une trame WM-Bus descendante de demande de relevé de la part de la passerelle 12C. La réception d'une trame WM-Bus descendante de demande de relevé provoque un envoi par le compteur à fluides 13A d'une trame WM-Bus montante de relevé lors d'une étape 607. L'étape 607 est suivie d'une étape 608.

Si le compteur à fluides reçoit une trame WM-Bus descendante de demande de relevé sans avoir reçu une trame WM-Bus descendante de synchronisation, le module de contrôle 30B note qu'une erreur s'est produite. Par ailleurs, si le compteur à fluides 13A ne reçoit pas de trame WM-Bus descendante de demande de relevé après une durée δ suivant la réception d'une trame WM-Bus descendante de synchronisation, le module de contrôle 30B passe directement à l'étape 608, sans noter d'erreur.

Lors de l'étape 608, le module de contrôle 30B vérifie si une erreur s'est produite. Si aucune erreur ne s'est produite, le module de contrôle 30B met le compteur à fluides 13A en veille jusqu'à la date de démarrage de la prochaine période de relevé de compteur *TO* qui lui a été indiqué dans la trame WM-Bus descendante de synchronisation.

Si une erreur s'est produite, le module de contrôle 30B vérifie si une trame WM-Bus descendante de synchronisation émise en mode multidiffusion par la passerelle 12C a été reçue par le compteur à fluides 13A lors d'une étape 609. Si une trame WM-Bus descendante de synchronisation émise en mode multidiffusion est reçue, le module de contrôle 30B conserve la date de démarrage de la prochaine période de relevé de compteur contenue dans cette trame et resynchronise une horloge interne sur l'information d'horodatage contenue dans ladite trame.

Si aucune trame WM-Bus descendante de synchronisation émise en mode multidiffusion n'est reçue, le module de contrôle 30B compare lors d'une étape 610 la date courante *t* à une date calculée à partir de la date de démarrage de la période de relevé de compteurs en cours. Cette date est calculée en ajoutant une durée prédéfinie Δ1 à la date de démarrage *T0* de la période de relevé de compteurs en cours. La durée prédéfinie Δ1 est par exemple de « 48 » heures. Si la date *t* est inférieure à la date *T0*+Δ1, le module de contrôle 30B retourne à l'étape 609 et continue à attendre une réception d'une trame WM-Bus descendante de synchronisation émise en mode multidiffusion par la passerelle 12C. Si la date *t* atteint la date *T0*+Δ1, dans ce cas, le module de contrôle 30B met le compteur à fluides 12C en veille en retournant à l'étape 601. Le module de contrôle 30B déduit en effet de la non réception d'au moins une trame WM-Bus descendante de synchronisation pendant la période prédéfinie Δ1 que les communications avec la passerelle 12B sont hors service et que par conséquent il est préférable de se mettre en veille pour limiter sa consommation d'énergie. Dans ce cas, la passerelle 12C se rendra compte que le compteur à fluides 13A ne répond plus, et avertira l'entité de gestion 11.

## Revendications

1. Procédé de relevé automatisé à distance de compteurs à fluides exécuté dans un système comprenant une pluralité de compteurs à fluides (13A, 13B, 13C, 14A, 14B, 14C), dits compteurs, mesurant chacun une consommation de fluides et au moins une passerelle (12A, 12B, 12C), chaque passerelle étant apte à échanger des trames conformes à un standard de communication sans fils avec une pluralité de compteurs via un premier réseau de communication (101), et à communiquer avec une entité de gestion (11) en charge de traiter de manière centralisée des informations représentatives d'une consommation de fluides, dites relevés, émanant de compteurs via un deuxième réseau (100), **caractérisé en ce que** le procédé comprend pour chaque passerelle :
- obtenir au moins une liste ordonnée de compteurs appariés avec ladite passerelle, chaque compteur de chaque liste ayant été apparié en exécutant une procédure d'appariement durant laquelle la passerelle a envoyé (407) à chaque compteur une trame, dite trame de synchronisation, chaque trame de synchronisation comprenant pour chaque liste une information d'horodatage permettant une mise à l'heure dudit compteur et une information représentative d'une même date de démarrage d'une prochaine période de relevé de compteurs par ladite passerelle, la passerelle étant en veille en dehors de chaque période de relevé, chaque compteur se réveillant à ladite date de démarrage indiquée dans la trame de synchronisation ;
- pour chaque liste et pendant chaque période de relevé correspondant à ladite liste :
• passer en mode actif et parcourir ladite liste dans l'ordre, et pour chaque compteur :
∘ envoyer (505) une trame de synchronisation audit compteur, la date de démarrage, dite prochaine date de démarrage, contenue dans ladite trame de synchronisation étant identique pour chaque compteur de la liste ;
∘ suite à une réception (506) d'un acquittement pour la trame de synchronisation, envoyer (508) une trame demandant audit compteur de fournir un relevé; et,
∘ passer (512) au compteur suivant de ladite liste suite à une réception (511) d'une trame, dite trame de relevé, contenant le relevé demandé, chaque compteur passant en veille suite à l'envoi de la trame de relevé ;
• et, passer en veille (501) suite au parcours de ladite liste jusqu'à la prochaine date de démarrage.

2. Procédé selon la revendication 1, **caractérisé en ce que**, lorsqu'au moins un compteur d'une liste ne renvoie pas d'acquittement suite à un envoi d'une trame de synchronisation destinée à ce compteur et/ou ne renvoie pas de trame de relevé suite à l'envoi d'une trame demandant de fournir un relevé destiné à ce compteur, suite au parcours de la liste ordonnée, la passerelle envoie au moins une trame de synchronisation en mode multidiffusion, chaque compteur restant éveillé tant qu'une condition de mise en veille dudit compteur n'est pas respectée, la condition de mise en veille dudit compteur étant respectée lorsque ledit compteur reçoit une trame de synchronisation.

3. Procédé selon la revendication 1 ou 2, **caractérisé en ce que** la trame de synchronisation fait office de trame demandant de fournir un relevé et la trame de relevé fait office de trame d'acquittement.

4. Procédé selon la revendication 1, 2 ou 3, **caractérisé en ce que** la passerelle modifie l'ordre des compteurs dans chaque liste à chaque période de relevé de compteurs de manière à équilibrer le temps de réveil desdits compteurs.

5. Procédé selon l'une quelconque des revendications précédentes, **caractérisé en ce que**, lorsqu'un compteur d'une liste ne renvoie pas d'acquittement suite à un envoi d'une trame de synchronisation destinée à ce compteur et/ou ne renvoie pas de trame de relevé suite à l'envoi d'une trame demandant de fournir un relevé destinée à ce compteur sur un nombre prédéfini de périodes de relevé de compteurs consécutives, la passerelle considère que la procédure d'appariement doit être réappliquée pour ce compteur.

6. Dispositif de type passerelle permettant de relever de manière automatisée à distance de compteurs à fluides dans un système comprenant une pluralité de compteurs à fluides (13A, 13B, 13C, 14A, 14B, 14C), dits compteurs, mesurant chacun une consommation de fluides, ledit dispositif étant apte à échanger des trames conformes à un standard de communication sans fils avec une pluralité de compteurs via un premier réseau de communication (101), et à communiquer avec une entité de gestion (11) en charge de traiter de manière centralisée des informations représentatives d'une consommation de fluides, dites relevés, émanant de compteurs via un deuxième réseau (100), **caractérisé en ce que** le dispositif comprend :
- des moyens d'obtention pour obtenir au moins une liste ordonnée de compteurs appariés avec ladite passerelle, chaque compteur de chaque liste ayant été apparié en exécutant une procédure d'appariement durant laquelle ledit dispositif a envoyé (407) à chaque compteur une trame, dite trame de synchronisation, chaque trame de synchronisation comprenant pour chaque liste une information d'horodatage permettant une mise à l'heure dudit compteur et une information représentative d'une même date de démarrage d'une prochaine période de relevé de compteurs par ledit dispositif, le dispositif étant en veille en dehors de chaque période de relevé, chaque compteur se réveillant à ladite date de démarrage indiquée dans la trame de synchronisation ;
- des moyens exécutés pour chaque liste et pendant chaque période de relevé correspondant à ladite liste comprenant :
des moyens de contrôle pour passer en mode actif et des moyens de parcours pour parcourir ladite liste dans l'ordre, et pour chaque compteur :
- des moyens de communication pour envoyer (505) une trame de synchronisation audit compteur, la date de démarrage, dite prochaine date de démarrage, contenue dans ladite trame de synchronisation étant identique pour chaque compteur de la liste ;
- des moyens de communication pour recevoir un acquittement pour la trame de synchronisation, et des moyens de communication pour envoyer (508) une trame demandant audit compteur de fournir un relevé, suite à une réception d'un acquittement;
- des moyens de communication pour recevoir une trame, dite trame de relevé, contenant un relevé demandé ; et,
- des moyens de contrôle pour passer (512) au compteur suivant de ladite liste suite à une réception (511) d'une trame de relevé, chaque compteur passant en veille suite à l'envoi de la trame de relevé ;
et, des moyens de contrôle pour passer en veille (501) suite au parcours de ladite liste jusqu'à la prochaine date de démarrage.

7. Procédé de relevé automatisé à distance de compteurs à fluides exécuté dans un système comprenant une pluralité de compteurs à fluides (13A, 13B, 13C, 14A, 14B, 14C), dits compteurs mesurant chacun une consommation de fluides, et une passerelle (12C), la passerelle étant apte à échanger des trames conformes à un standard de communication sans fils avec la pluralité de compteurs via un premier réseau de communication (101), et à communiquer avec une entité de gestion (11) en charge de traiter de manière centralisée des informations représentatives d'une consommation de fluides, dites relevés, émanant de compteurs via un deuxième réseau (100), la passerelle définissant des périodes de relevé de compteurs durant lesquelles elle effectue des relevés de compteurs, **caractérisé en ce que** le procédé comprend pour chaque compteur et chaque période de relevé de compteurs :
- obtenir une première date de démarrage d'une période de relevé de compteurs, la première date ayant été obtenue lors d'une réception d'une trame de synchronisation, chaque trame de synchronisation comprenant une information d'horodatage permettant une mise à l'heure dudit compteur et une information représentative d'une date de démarrage d'une prochaine période de relevé de compteurs par la passerelle, ladite date étant identique pour un ensemble de compteurs d'une liste ordonnée de compteurs appariés avec ladite passerelle, chaque trame de synchronisation ayant été transmise soit au cours de l'exécution d'une procédure d'appariement entre le compteur et ladite passerelle, soit pendant une période de relevé de compteurs précédente ;
- se réveiller à la première date de démarrage ;
- en cas de réception d'une trame de synchronisation, conserver la date de démarrage, dite deuxième date de démarrage, indiquée dans la trame de synchronisation et transmettre un acquittement à la passerelle pour ladite trame de synchronisation ;
- en cas de réception d'une trame demandant audit compteur de fournir un relevé, envoyer à la passerelle une trame, dite trame de relevé, contenant le relevé demandé, la date d'envoi de la trame de synchronisation et de la trame demandant de fournir un relevé dans la période de relevé de compteurs dépendant d'une position dudit compteur dans la liste ordonnée ;
- et, se mettre en veille suite à l'envoi de la trame de relevé jusqu'à la deuxième date de démarrage.

8. Procédé selon la revendication 7, **caractérisé en ce que**, si le compteur à fluides reçoit une trame demandant audit compteur de fournir un relevé sans avoir reçu au préalable une trame de synchronisation, le compteur reste éveillé tant qu'une condition de mise en veille n'est pas respectée, la condition de mise en veille étant respectée lorsque ledit compteur reçoit une trame de synchronisation émise en mode multidiffusion par la passerelle.

9. Dispositif de type compteur à fluides, dit compteur, compris dans un système comprenant une pluralité de compteurs (13A, 13B, 13C, 14A, 14B, 14C) mesurant chacun une consommation de fluides, et une passerelle (12C), la passerelle étant apte à échanger des trames conformes à un standard de communication sans fils avec la pluralité de compteurs via un premier réseau de communication (101), et à communiquer avec une entité de gestion (11) en charge de traiter de manière centralisée des informations représentatives d'une consommation de fluides, dites relevés, émanant de compteurs via un deuxième réseau (100), la passerelle définissant des périodes de relevé de compteurs durant lesquelles elle effectue des relevés de compteurs, **caractérisé en ce que** le dispositif comprend :
- des moyens d'obtention pour obtenir une première date de démarrage d'une période de relevé de compteurs, la première date ayant été obtenue lors d'une réception d'une trame de synchronisation, chaque trame de synchronisation comprenant une information d'horodatage permettant une mise à l'heure dudit dispositif et une information représentative d'une date de démarrage d'une prochaine période de relevé de compteurs par la passerelle, ladite date étant identique pour un ensemble de compteurs d'une liste ordonnée de compteurs appariés avec ladite passerelle, chaque trame de synchronisation ayant été transmise soit au cours de l'exécution d'une procédure d'appariement entre le dispositif et ladite passerelle, soit pendant une période de relevé de compteurs précédente ;
- des moyens de contrôle pour réveiller le dispositif à la première date de démarrage ;
- des moyens de communication pour recevoir une trame de synchronisation ;
- des moyens de stockage pour conserver une date de démarrage, dite deuxième date de démarrage, indiquée dans une trame de synchronisation et des moyens de communication pour transmettre un acquittement à la passerelle en cas de réception d'une trame de synchronisation ;
- des moyens de communication pour recevoir une trame demandant audit dispositif de fournir un relevé ;
- des moyens de communication pour envoyer à la passerelle une trame, dite trame de relevé, contenant un relevé en cas de réception d'une trame demandant audit dispositif de fournir un relevé, la date d'envoi de la trame de synchronisation et de la trame demandant de fournir un relevé dans la période de relevé de compteurs dépendant d'une position dudit dispositif dans la liste ordonnée ;
- et, des moyens de contrôle pour mettre en veille le dispositif suite à l'envoi de la trame de relevé.

10. Programme d'ordinateur, **caractérisé en ce qu'**il comprend des instructions pour mettre en oeuvre, par un dispositif, le procédé selon l'une quelconque des revendications 1 à 5 ou le procédé selon l'une quelconque des revendications 7 à 8, lorsque ledit programme est exécuté par une unité de calcul dudit dispositif.

11. Moyens de stockage, **caractérisés en ce qu'**ils stockent un programme d'ordinateur comprenant des instructions pour mettre en oeuvre, par un dispositif, le procédé selon l'une quelconque des revendications 1 à 5 ou le procédé selon l'une quelconque des revendications 7 à 8, lorsque ledit programme est exécuté par une unité de calcul dudit dispositif.

## Patentansprüche

1. Verfahren zur automatisierten Fernablesung von Flüssigkeitszählern, das in einem System ausgeführt wird, das eine Vielzahl von Zähler genannten Flüssigkeitszählern (13A, 13B, 13C, 14A, 14B, 14C), die je einen Flüssigkeitsverbrauch messen, und mindestens ein Gateway (12A, 12B, 12C) enthält, wobei jedes Gateway geeignet ist, einem drahtlosen Kommunikationsstandard entsprechende Rahmen über ein erstes Kommunikationsnetz (101) mit einer Vielzahl von Zählern auszutauschen, und mit einer Verwaltungsentität (11) zu kommunizieren, die dafür zuständig ist, von Zählern über ein zweites Netz (100) kommende, für einen Flüssigkeitsverbrauch repräsentative Informationen, Ablesungen genannt, zentral zu verarbeiten, **dadurch gekennzeichnet, dass** das Verfahren für jedes Gateway enthält:
- Erhalt mindestens einer geordneten Liste von mit dem Gateway gepaarten Zählern, wobei jeder Zähler jeder Liste gepaart wurde, indem ein Paarungsverfahren ausgeführt wurde, während dessen das Gateway an jeden Zähler einen Rahmen, Synchronisationsrahmen genannt, gesendet hat (407), wobei jeder Synchronisationsrahmen für jede Liste eine Datum- und Uhrzeitinformation, die eine Zeiteinstellung des Zählers erlaubt, und eine für ein gleiches Startdatum eines nächsten Zählerablesezeitraums durch das Gateway repräsentative Information enthält, wobei das Gateway außerhalb jedes Ablesezeitraums im Standby-Modus ist, wobei jeder Zähler zum im Synchronisationsrahmen angezeigten Startdatum aufwacht;
- für jede Liste und während jedes der Liste entsprechenden Ablesezeitraums:
• Übergang in den aktiven Modus und Durchlaufen der Liste der Reihe nach, und für jeden Zähler:
o Senden (505) eines Synchronisationsrahmens an den Zähler, wobei das im Synchronisationsrahmen enthaltene Startdatum, nächstes Startdatum genannt, für jeden Zähler der Liste gleich ist;
o nach einem Empfang (506) einer Quittierung für den Synchronisationsrahmen, Senden (508) eines vom Zähler die Lieferung einer Ablesung fordernden Rahmens; und
o Übergang (512) zum folgenden Zähler der Liste nach einem Empfang (511) eines die geforderte Ablesung enthaltenden Rahmens, Ablesungsrahmen genannt, wobei jeder Zähler nach dem Senden des Ablesungsrahmens in den Standby-Modus übergeht;
• und Übergang in den Standby-Modus (501) nach dem Durchlaufen der Liste bis zum nächsten Startdatum.

2. Verfahren nach Anspruch 1, **dadurch gekennzeichnet, dass**, wenn mindestens ein Zähler einer Liste nach einem Senden eines für diesen Zähler bestimmten Synchronisationsrahmens keine Quittierung zurücksendet und/oder nach dem Senden eines eine Lieferung einer für diesen Zähler bestimmten Ablesung fordernden Rahmens keinen Ablesungsrahmen zurücksendet, nach dem Durchlauf der geordneten Liste, das Gateway mindestens einen Synchronisationsrahmen im Multicast-Modus sendet, wobei jeder Zähler wach bleibt, so lange eine Voraussetzung des Versetzens des Zählers in den Standby-Modus nicht beachtet wird, wobei die Voraussetzung des Versetzens des Zählers in den Standby-Modus beachtet wird, wenn der Zähler einen Synchronisationsrahmen empfängt.

3. Verfahren nach Anspruch 1 oder 2, **dadurch gekennzeichnet, dass** der Synchronisationsrahmen als ein eine Lieferung einer Ablesung fordernder Rahmen dient, und der Ablesungsrahmen als Quittierungs-Rahmen dient.

4. Verfahren nach Anspruch 1, 2 oder 3, **dadurch gekennzeichnet, dass** das Gateway die Reihenfolge der Zähler in jeder Liste in jedem Zählerablesezeitraum ändert, um die Aufwachzeit der Zähler auszugleichen.

5. Verfahren nach einem der vorhergehenden Ansprüche, **dadurch gekennzeichnet, dass**, wenn ein Zähler einer Liste nach einem Senden eines für diesen Zähler bestimmten Synchronisationsrahmens keine Quittierung zurücksendet und/oder nach dem Senden eines eine Lieferung einer für diesen Zähler bestimmten Ablesung fordernden Rahmens über eine vordefinierte Anzahl von aufeinanderfolgenden Zählerablesezeiträumen keinen Ablesungsrahmen zurücksendet, das Gateway annimmt, dass das Paarungsverfahren für diesen Zähler erneut angewendet werden muss.

6. Vorrichtung von der Art Gateway, die es ermöglicht, Flüssigkeitszähler in einem System automatisiert fernabzulesen, das eine Vielzahl von Flüssigkeitszählern (13A, 13B, 13C, 14A, 14B, 14C), Zähler genannt, enthält, die je einen Flüssigkeitsverbrauch messen, wobei die Vorrichtung geeignet ist, einem drahtlosen Kommunikationsstandard entsprechende Rahmen über ein erstes Kommunikationsnetz (101) mit einer Vielzahl von Zählern auszutauschen, und mit einer Verwaltungsentität (11) zu kommunizieren, die dafür zuständig ist, von Zählern über ein zweites Netz (100) kommende, für einen Flüssigkeitsverbrauch repräsentative Informationen, Ablesungen genannt, zentral zu verarbeiten, **dadurch gekennzeichnet, dass** die Vorrichtung enthält:
- Erhaltseinrichtungen zum Erhalt mindestens einer geordneten Liste von mit dem Gateway gepaarten Zählern, wobei jeder Zähler jeder Liste gepaart wurde, indem ein Paarungsverfahren ausgeführt wurde, während dessen die Vorrichtung an jeden Zähler einen Rahmen, Synchronisationsrahmen genannt, gesendet hat (407), wobei jeder Synchronisationsrahmen für jede Liste eine Datum- und Uhrzeitinformation, die eine Zeiteinstellung des Zählers erlaubt, und eine für ein gleiches Startdatum eines nächsten Zählerablesezeitraums durch die Vorrichtung repräsentative Information enthält, wobei die Vorrichtung außerhalb jedes Ablesezeitraums im Standby-Modus ist, wobei jeder Zähler zum im Synchronisationsrahmen angezeigten Startdatum aufwacht;
- Einrichtungen, die für jede Liste und während jedes Ablesezeitraums entsprechend der Liste ausgeführt werden, die enthalten:
Steuereinrichtungen, um in den aktiven Modus überzugehen, und Durchlaufeinrichtungen, um die Liste in der Reihenfolge zu durchlaufen, und für jeden Zähler:
- Kommunikationseinrichtungen, um einen Synchronisationsrahmen an den Zähler zu senden (505), wobei das im Synchronisationsrahmen enthaltene Startdatum, nächstes Startdatum genannt, für jeden Zähler der Liste gleich ist;
- Kommunikationseinrichtungen, um eine Quittierung für den Synchronisationsrahmen zu empfangen, und Kommunikationseinrichtungen, um nach einem Empfang einer Quittierung einen vom Zähler die Lieferung einer Ablesung fordernden Rahmen zu senden (508);
- Kommunikationseinrichtungen, um einen eine geforderte Ablesung enthaltenden Rahmen, Ablesungsrahmen genannt, zu empfangen; und
- Steuereinrichtungen, um nach einem Empfang (511) eines Ablesungsrahmens zum folgenden Zähler der Liste überzugehen (512), wobei jeder Zähler nach dem Senden des Ablesungsrahmens in den Standby-Modus übergeht;
und Steuereinrichtungen, um nach dem Durchlauf der Liste bis zum nächsten Startdatum in den Standby-Modus überzugehen (501).

7. Verfahren zur automatisierten Fernablesung von Flüssigkeitszählern, das in einem System ausgeführt wird, das eine Vielzahl von Zähler genannten Flüssigkeitszählern (13A, 13B, 13C, 14A, 14B, 14C), die je einen Flüssigkeitsverbrauch messen, und ein Gateway (12C) enthält, wobei das Gateway geeignet ist, einem drahtlosen Kommunikationsstandard entsprechende Rahmen über ein erstes Kommunikationsnetz (101) mit der Vielzahl von Zählern auszutauschen, und mit einer Verwaltungsentität (11) zu kommunizieren, die dafür zuständig ist, von Zählern über ein zweites Netz (100) kommende, für einen Flüssigkeitsverbrauch repräsentative Informationen, Ablesungen genannt, zentral zu verarbeiten, wobei das Gateway Zählerablesezeiträume definiert, während denen es Zählerablesungen ausführt, **dadurch gekennzeichnet, dass** das Verfahren für jeden Zähler und für jeden Zählerablesezeitraum enthält:
- Erhalt eines ersten Startdatums eines Zählerablesezeitraums, wobei das erste Datum bei einem Empfang eines Synchronisationsrahmens erhalten wurde, wobei jeder Synchronisationsrahmen eine Datum- und Uhrzeitinformation, die eine Zeiteinstellung des Zählers erlaubt, und eine für ein Startdatum eines nächsten Zählerablesezeitraums durch das Gateway repräsentative Information enthält, wobei das Datum für eine Einheit von Zählern einer geordneten Liste von mit dem Gateway gepaarten Zählern gleich ist, wobei jeder Synchronisationsrahmen entweder während der Ausführung eines Paarungsverfahrens zwischen dem Zähler und dem Gateway oder während eines vorhergehenden Zählerablesezeitraums übertragen wurde;
- Aufwachen am ersten Startdatum;
- im Fall eines Empfangs eines Synchronisationsrahmens, Behalten des im Synchronisationsrahmen angezeigten Startdatums, zweites Startdatum genannt, und Übertragen einer Quittierung an das Gateway für den Synchronisationsrahmen;
- im Fall des Empfangs eines vom Zähler die Lieferung einer Ablesung fordernden Rahmens, Senden eines die geforderte Ablesung enthaltenden Rahmens, Ablesungsrahmen genannt, an das Gateway, wobei das Sendedatum des Synchronisationsrahmens und des die Lieferung einer Ablesung im Zählerablesezeitraum fordernden Rahmens von einer Position des Zählers in der geordneten Liste abhängt;
- und Übergang in den Standby-Modus nach dem Senden des Ablesungsrahmens bis zum zweiten Startdatum.

8. Verfahren nach Anspruch 7, **dadurch gekennzeichnet, dass**, wenn der Flüssigkeitszähler einen vom Zähler die Lieferung einer Ablesung fordernden Rahmen empfängt, ohne vorher einen Synchronisationsrahmen empfangen zu haben, der Zähler wach bleibt, so lange eine Voraussetzung des Versetzens in den Standby-Modus nicht beachtet wird, wobei die Voraussetzung des Versetzens in den Standby-Modus beachtet wird, wenn der Zähler vom Gateway einen im Multicast-Modus gesendeten Synchronisationsrahmen empfängt.

9. Vorrichtung der Art Flüssigkeitszähler, Zähler genannt, die in einem System enthalten ist, das eine Vielzahl von Zählern (13A, 13B, 13C, 14A, 14B, 14C), die je einen Flüssigkeitsverbrauch messen, und ein Gateway (12C) enthält, wobei das Gateway geeignet ist, einem drahtlosen Kommunikationsstandard entsprechende Rahmen über ein erstes Kommunikationsnetz (101) mit der Vielzahl von Zählern auszutauschen und mit einer Verwaltungsentität (11) zu kommunizieren, die dafür zuständig ist, von Zählern über ein zweites Netz (100) kommende, für einen Flüssigkeitsverbrauch repräsentative Informationen, Ablesungen genannt, zentral zu verarbeiten, wobei das Gateway Zählerablesezeiträume definiert, während denen es Zählerablesungen ausführt, **dadurch gekennzeichnet, dass** die Vorrichtung enthält:
- Erhaltseinrichtungen, um ein erstes Startdatum eines Zählerablesezeitraums zu erhalten, wobei das erste Datum bei einem Empfang eines Synchronisationsrahmens erhalten wurde, wobei jeder Synchronisationsrahmen eine Datum- und Uhrzeitinformation, die eine Zeiteinstellung der Vorrichtung erlaubt, und eine für ein Startdatum eines nächsten Zählerablesezeitraums durch das Gateway repräsentative Information enthält, wobei das Datum für eine Einheit von Zählern einer geordneten Liste von Zählern gleich ist, die mit dem Gateway gepaart sind, wobei jeder Synchronisationsrahmen entweder während der Ausführung eines Paarungsverfahrens zwischen der Vorrichtung und dem Gateway oder während eines vorhergehenden Zählerablesezeitraums übertragen wurde;
- Steuereinrichtungen, um die Vorrichtung am ersten Startdatum aufzuwecken;
- Kommunikationseinrichtungen, um einen Synchronisationsrahmen zu empfangen;
- Speichereinrichtungen, um ein Startdatum, zweites Startdatum genannt, zu behalten, das in einem Synchronisationsrahmen angezeigt wird, und Kommunikationseinrichtungen, um im Fall des Empfangs eines Synchronisationsrahmens eine Quittierung an das Gateway zu übertragen;
- Kommunikationseinrichtungen, um einen Rahmen zu empfangen, der von der Vorrichtung fordert, eine Ablesung zu liefern;
- Kommunikationseinrichtungen, um im Fall des Empfangs eines von der Vorrichtung die Lieferung einer Ablesung fordernden Rahmens einen eine Ablesung enthaltenden Rahmen, Ablesungsrahmen genannt, an das Gateway zu senden, wobei das Sendedatum des Synchronisationsrahmens und des die Lieferung einer Ablesung im Zählerablesezeitraum fordernden Rahmens von einer Position der Vorrichtung in der geordneten Liste abhängt;
- und Steuereinrichtungen, um die Vorrichtung nach dem Senden des Ablesungsrahmens in den Standby-Modus zu versetzen.

10. Computerprogramm, **dadurch gekennzeichnet, dass** es Anweisungen enthält, um das Verfahren nach einem der Ansprüche 1 bis 5 oder das Verfahren nach einem der Ansprüche 7 bis 8 durch eine Vorrichtung durchzuführen, wenn das Programm von einer Recheneinheit der Vorrichtung ausgeführt wird.

11. Speichereinrichtungen, **dadurch gekennzeichnet, dass** sie ein Computerprogramm speichern, das Anweisungen enthält, um das Verfahren nach einem der Ansprüche 1 bis 5 oder das Verfahren nach einem der Ansprüche 7 bis 8 durch eine Vorrichtung durchzuführen, wenn das Programm von einer Recheneinheit der Vorrichtung ausgeführt wird.

## Claims

1. Method for the automated remote reading of fluid meters implemented in a system comprising a plurality of fluid meters (13A, 13B, 13C, 14A, 14B, 14C), referred to as meters, each measuring a fluid consumption, and at least one gateway (12A, 12B, 12C), each gateway being able to exchange frames in accordance with a wireless communication standard with a plurality of meters via a first communication network (101), and to communicate with a management entity (11) responsible for processing in a centralised manner information representing a fluid consumption, referred to as readings, coming from meters via a second network (100), **characterised in that** the method comprises, for each gateway:
- obtaining at least one ordered list of meters paired with said gateway, each meter in each list having been paired by implementing a pairing procedure during which the gateway sent (407) to each meter a frame, referred to as a synchronisation frame, each synchronisation frame comprising for each list timestamp information enabling the time of said meter to be set and information representing one and the same start time of a next period of reading meters by said gateway, the gateway being on standby outside each reading period, each meter waking up at said start time indicated in the synchronisation frame;
- for each list and during each reading period corresponding to said list:
• going into active mode and running through said list in order, and, for each meter:
o sending (505) a synchronisation frame to said meter, the start time, referred to as the next start time, contained in said synchronisation frame being identical for each meter in the list;
∘ following reception (506) of an acknowledgement for the synchronisation frame, sending (508) a frame requesting said meter to provide a reading; and
∘ passing (512) to the following meter in said list following reception (511) of a frame, referred to as a reading frame, containing the requested reading, each meter going on standby following the sending of the reading frame;
• and going on standby (501) following the running through of said list until the next start time.

2. Method according to claim 1, **characterised in that**, when at least one meter in a list does not send an acknowledgement following a sending of a synchronisation frame intended for this meter and/or does not send a reading frame following the sending of a frame requesting providing a reading intended for this meter, following the running through of the ordered list, the gateway sends at least one synchronisation frame in broadcast mode, each meter remaining awake as long as a condition of putting said meter on standby is not respected, the condition of putting said meter on standby being respected when said meter receives a synchronisation frame.

3. Method according to claim 1 or 2, **characterised in that** the synchronisation frame serves as a frame requesting providing a reading and the reading frame serves as an acknowledgement frame.

4. Method according to claim 1, 2 or 3, **characterised in that** the gateway modifies the order of the meters in each list at each meter reading period so as to balance the wake-up time of said meters.

5. Method according to any one of the preceding claims, **characterised in that**, when a meter in a list does not return an acknowledgement following a sending of a synchronisation frame intended for this meter and/or does not return a reading frame following the sending of a frame requesting providing a reading intended for this meter over a predefined number of consecutive meter reading periods, the gateway considers that the pairing procedure must be reapplied for this meter.

6. Device of the gateway type making it possible to remotely read fluid meters in an automated manner in a system comprising a plurality of fluid meters (13A, 13B, 13C, 14A, 14B, 14C), referred to as meters, each measuring a fluid consumption, said device being able to exchange frames according to a wireless communication standard with a plurality of meters via a first communication network (101), and to communicate with a management entity (11) responsible for processing in a centralised manner information representing a consumption of fluids, referred to as readings, coming from meters via a second network (100), **characterised in that** the device comprises:
- obtaining means for obtaining at least one ordered list of meters paired with said gateway, each meter in each list having been paired by implementing a pairing procedure during which said device sent (407) to each meter a frame, referred to as a synchronisation frame, each synchronisation frame comprising for each list timestamp information enabling the time of said meter to be set and information representing one and the same start time of a next period of reading meters by said device, said device being on standby outside each reading period, each meter waking up at said start time indicated in the synchronisation frame;
- means implemented for each list and during each reading period corresponding to said list comprising:
control means for going into active mode and running-through means for running through said list in order, and, for each meter:
- communication means for sending (505) a synchronisation frame to said meter, the start time, referred to as the next start time, contained in said synchronisation frame being identical for each meter in the list;
- communication means for receiving an acknowledgement for the synchronisation frame, and communication means for sending (508) a frame requesting said meter to provide a reading, following a reception of an acknowledgement;
- communication means for receiving a frame, referred to as a reading frame, containing a requested reading; and
- control means for passing (512) to the following meter in said list following a reception (511) of a reading frame, each meter going on standby following the sending of the reading frame;
and control means for going on standby (501) following the running through of said list until the next start time.

7. Method for the automated remote reading of fluid meters implemented in a system comprising a plurality of fluid meters (13A, 13B, 13C, 14A, 14B, 14C), referred to as meters, each measuring a fluid consumption, and a gateway (12C), the gateway being able to exchange frames according to a wireless communication standard with the plurality of meters via a first communication network (101), and to communicate with a management entity (11) responsible for processing in a centralised manner information representing a fluid consumption, referred to as readings, coming from meters via a second network (100), the gateway defining meter reading periods during which it performs meter readings, **characterised in that** the method comprises, for each meter and each meter reading period:
- obtaining a first start time of a meter reading period, the first time having been obtained when a synchronisation frame is received, each synchronisation frame comprising timestamp information enabling the time of said meter to be set and information representing a start time of a next period of reading meters by the gateway, said time being identical for a set of meters in an ordered list of meters paired with said gateway, each synchronisation frame having been transmitted either during the implementation of a procedure of pairing between the meter and said gateway, or during a previous meter reading period;
- waking up at the first start time;
- in the event of reception of a synchronisation frame, keeping the start time, referred to as the second start time, indicated in the synchronisation frame and transmitting an acknowledgement to the gateway for said synchronisation frame;
- in the event of reception of a frame requesting said meter to provide a reading, sending to the gateway a frame, referred to as a reading frame, containing the requested reading, the time of sending the synchronisation frame and the frame requesting providing a reading in the meter reading period being dependent on a position of said meter in the ordered list;
- and going on standby following the sending of the reading frame until the second start time.

8. Method according to claim 7, **characterised in that**, if the fluid meter receives a frame requesting said meter to provide a reading without previously having received a synchronisation frame, the meter remains awake as long as a condition of putting on standby is not respected, the condition of putting on standby being respected when said meter receives a synchronisation frame sent in broadcast mode by the gateway.

9. Device of the fluid meter type, referred to as a meter, included in a system comprising a plurality of meters (13A, 13B, 13C, 14A, 14B, 14C) each measuring a fluid consumption, and a gateway (12C), the gateway being able to exchange data according to a wireless communication standard with the plurality of meters via a first communication network (101), and to communicate with a management entity (11) responsible for processing in a centralised manner information representing a fluid consumption, referred to as readings, coming from meters via a second network (100), the gateway defining meter reading periods during which it makes meter readings, **characterised in that** the device comprises:
- obtaining means for obtaining a first start time of a meter reading period, the first time having been obtained when a synchronisation frame is received, each synchronisation frame comprising timestamp information enabling the time of said device to be set and information representing a start time of a next period of reading meters by the gateway, said time being identical for a set of meters in an ordered list of meters paired with said gateway, each synchronisation frame having been transmitted either during the implementation of a procedure of pairing between the device and said gateway, or during a previous meter reading period;
- control means for waking up the device at the first start time;
- communication means for receiving a synchronisation frame;
- storage means for storing a start time, referred to as a second start time, indicated in a synchronisation frame, and communication means for transmitting an acknowledgement to the gateway in the event of reception of a synchronisation frame;
- communication means for receiving a frame requesting said device to provide a reading;
- communication means for sending to the gateway a frame, referred to as a reading frame, containing a reading in the event of reception of a frame requesting said device to provide a reading, the time of sending the synchronisation frame and the frame requesting providing a reading in the meter reading period being dependent on a position of said device in the ordered list;
- and control means for putting the device on standby following the sending of the reading frame.

10. Computer program, **characterised in that** it comprises instructions for implementing, by a device, the method according to any one of claims 1 to 5 or the method according to either one of claims 7 to 8, when said program is executed by a calculation unit of said device.

11. Storage means, **characterised in that** they store a computer program comprising instructions for implementing, by a device, the method according to any one of claims 1 to 5 or the method according to either one of claims 7 to 8, when said program is executed by a calculation unit of said device.
